# EUROPEAN PATENT APPLICATION

(11) **EP 0 994 157 A1**
(43) Date of publication of application: **19.04.2000**
(21) Application number: 98203441.5
(22) Date of filing: 12.10.1998
(51) Int. Cl.: C08L 77/00, C08G 83/00

(54) **Molecular reinforced polymeric composition**

(71) Applicant: DSM N.V., 6411 TE Heerlen (NL)
(72) Inventor: Soliman, Maria, 6118 AN Nieuwstadt (NL); Scott, Elinor, 5913 RG Venlo (NL); Wahlen, Lars Hinrich, 22927 Grosshansdorf (DE)

(57) **Abstract**

The invention relates to a molecular reinforced polyamide composition comprising at least one linear or branched polyamide and a hyperbranched porous aromatic polymeric macromolecule which comprises rigid aromatic recurring units, the macromolecule also comprising at least one site on which at least one linear or branched polyamide chain is attached, the functional group optionally functionalized with a functional group that comprises an initiator molecule for an anionic polyamide polymerisation reaction. The composition according to the invention is homogeneous in the melt and shows at least the same improvement of mechanical properties (especially the modulus, strength and strain-at-break) as the composition according to the state of the art. The composition according to the invention is preferably obtained by copolymerizing the hyperbranched macromolecule with the monomers from which the polyamide is formed. If at least site of the hyperbranched porous aromatic polymeric macromolecule is functionalized with a functional group that comprised an initiator molecule for an anionic polyamide polymerisation reaction, the compatibility between the hyperbranched macromolecule and the polymer matrix is improved, such that the rate of dissolution and the amount of hyperbranched macromolecule that can be dissolved in the polyamide matrix is enhanced and hence, a composition with further improved mechanical properties is obtained.

## Description

This invention relates to a molecular reinforced polyamide composition comprising at least one linear or branched polyamide and a hyperbranched porous aromatic polymeric macromolecule which comprises rigid aromatic recurring units.

Such a composition is known from US-5.480.944, which discloses a polyamide interpenetrating blend, obtained by melt- or solution-blending of nylon-6, having dispersed therein a hyperbranched porous aromatic polymeric macromolecule which comprises rigid aromatic recurring units and which is prepared from aminobenzylcyclohexylamine, 1,3,5-benzene tricarboxylic acid and p-amino benzoic acid. Most essential for the composition according the state of the art is that both components, i.e. the hyperbranched macromolecule and the polyamide matrix polymer are non-reactive towards each other, more specifically, the hyperbranched macromolecule does not react with the end groups of the polyamide matrix polymer under preparation conditions. Hence, attaching the polyamide chains onto the hyperbranched macromolecule via coupling reactions between reactive moieties of the hyperbranched macromolecule and the end groups of the polyamide matrix polymer does not occur.

Although it is shown in US 5.480.944 that the composition according to the state of the art has an increased glass transition temperature and although the strength of the composition has improved vis-à-vis the equivalent composition which does not contain the hyperbranched macromolecule, it was also found that the compositions according to the state of the art exhibited a severe decrease in the strain-at-break in comparison to the equivalent concentration without the hyperbranched macromolecule, i.e. the composition had become more brittle. This increase in brittleness may be attributed to an amount of demixing of both components, i.e. the polyamide matrix polymer and the hyperbranched macromolecule, such that an incomplete molecular reinforcement of the polyamide matrix was accomplished. Furthermore, it was reported that at least 12.5 % by weight (calculated relative to the total weight of the composition) of the hyperbranched macromolecule had to be incorporated into the composition in order to obtain the reported improvement in mechanical properties. This amount is too high to lead to an economical favourable application.

It was the goal of this invention to develop a molecular reinforced polyamide composition, comprising at least one linear or branched polyamide and a hyperbranched porous aromatic polymeric macromolecule which comprises rigid aromatic recurring units, that is homogeneous in the melt, that shows at least the same improvement of mechanical properties (especially the modulus, strength and strain-at-break) as the composition according to the state of the art.

The inventors have now found that such a goal could be attained if the hyperbranched porous aromatic polymeric macromolecule comprises at least one site on which at least one linear or branched polyamide chain is attached.

Advantageously, it was also found that only very small amounts of the hyperbranched macromolecule had to be incorporated in the composition according to the invention in order to obtain the desired improvement in mechanical properties, amounts as low as 2 % by weight.

As a further advantage, it was observed that the composition according to the invention showed a better flow during injection moulding.

The composition according to the invention exhibits three essential properties.
1. The branches of the hyperbranched macromolecules comprise rigid aromatic recurring units. Preferentially, such units are linked to each other by electrophilic or nucleophilic reactive moieties or derivatives thereof. Such branches are rigid and provide for a stiff skeleton within the polymeric composition according to the invention. The stiff skeletons are the molecular equivalent for e.g. glass fibres that are frequently used for reinforcement of polyamides in order to improve the mechanical properties of said polyamides. However, whereas the glass fibres exhibit anisotropic reinforcement, hyperbranched macromolecules exhibit isotropic reinforcement, which is the more preferred type of reinforcement. Furthermore, owing to their smaller weight/volume ratio, at the same volume concentration the macromolecules give rise to a composition with a lower weight, compared to compositions which comprise glass fibres.
2. The branches of the hyperbranched macromolecules comprise at least one site that is capable of reacting with at least one polyamide chain, such that the polyamide chain becomes attached to the hyperbranched macromolecule. Preferentially, such site comprise functional groups. For example, the end groups of the linear or branched polyamide polymer chain or the functional groups of the monomers of which the linear or branched polyamide matrix polymer may be produced, may react with the functional groups of the hyperbranched macromolecule. However, attaching the polyamide chains to the hyperbranched macromolecule is not limited to covalent bonding alone ; also ionic bonding, bonding through hydrogen brid ges or a combination of said bonds is a possible embodiment.
3. The hyperbranched macromolecules are porous. As used herein, "porous" means that the hyperbranched macromolecule is an open structure requiring that the ratio of the volume material in the hyperbranched macromolecule to the volume of gyration of the hyperbranched macromolecule is from about 0.01 to about 0.5, more preferentially from about 0.02 to about 0.4, most preferentially from about 0.04 to about 0.3. The volume of the hyperbranched macromolecule may be calculated from relevant atomic volumes and bond lengths reported in the literature. See for example B. Wunderlich, Macromolecular Physics, Vol. I, Academic Press, New York (1973), pages 39-68, and A.J. Hopfinger, Conformational Properties of Macromolecules, Academic Press, New York (1973), pages 2-24. The volume of gyration may be determined by e.g. small angle X-ray scattering or light scattering measurements performed on solutions of the hyperbranched macromolecules in an appropriate solvent as described e.g. by J.P. Sibilia (Editor) , A Guide to Materials Characterisation and Chemical Analysis, VHC, New York (1988). The volume of gyration may also be calculated by computers using appropriate computer programs, atomic sizes, bond lengths and bond angles. The porosity of the hyperbranched macromolecule depends mostly on the average distance between the branchpoints in the branches of the hyperbranched macromolecule. To this end, non-branching recurring monomeric units may be included in the branches, together with branching units.

The hyperbranched macromolecules comprised in the composition according to the invention differ fundamentally from dendrimers, such as described e.g. in EP A-575.596. While the first are highly porous, hyperbranched and capable of accommodating a relatively large volume fraction of interpenetrating linear or branched polymeric chains, the latter are very compact and dense, very regularly branched and incapable of accommodating interpenetrating linear or branched polymer chains. Examples of a comparison between porous and dendrimeric macromolecules can be found in US 5.480.944.

Preferentially, the composition according to the invention comprises a hyperbranched porous aromatic polymeric macromolecule which comprises
a) one or more aromatic core moieties according to Formula 1

   -(A¹)ₐ-R¹-(B¹)_{b}- ; (1)
b) a branched polymeric moiety bonded to and projecting away from said core moieties having
   b1) a plurality of branching recurring monomeric units according to Formula 2 and optionally

      -(B²)_{c}-R²-(A²)_{d}- (2)
   b2) a plurality of non-branching recurring monomeric units according to Formula 3

      -B³-R³-A³- (3)
c) a plurality of sites on the branched polymeric moiety and bonded thereto, said sites according to Formula 4

   -Z¹ (4)

   when d is larger than c, and said sites according to Formula 5

   -Z² (5)

   when c is larger than d ;
   wherein :
   R¹, R² and R³ are aromatic moieties, being the same or different at each occurrence ; preferentially they are selected from the group consisting of phenyl, biphenyl, naphthyl, anthracyl, phenanthryl or combinations of said optionally substituted aromatic groups thereof, the aromatic groups linked together by a linkage moiety, preferentially selected from the group consisting of amide, ester, azo, carbonyl, sulfone, sulfide, alkylene from 1 to 10 carbon atoms, ether and urethane ;
   Z¹ is the same or different at each occurrence and is an electrophilic group capable of a reaction with a Z²-group to form a covalent bond or a derivative thereof ; Z¹ is preferentially selected from the group consisting of COOR⁴, NCO, COCl and COOMe, wherein Me is the same or different at each occurrence and is a monovalent cation, preferentially selected from the group consisting of NH₄⁺, Na⁺, K⁺, Li⁺, Cu⁺ and Ni⁺ ;
   Z² is the same or different at each occurrence and is a nucleophilic group capable of a reaction with a Z¹-group to form a covalent bond or a derivative thereof ; Z² is preferentially selected from the group consisting of OH, NH₂, N(R⁴)₃⁺, CN and CON(R⁴)₂ ;
   R⁴ is the same or different at each occurrence and is selected from the group consisting of hydrogen, alkyl, aryl and aralkyl ;
   A¹, A² and A³ are the same or different at each occurrence and are the residues of an nucleophilic group formed by a reaction between a nucleophilic group Z² and an electrophilic group Z¹ ;
   B¹, B², B³ are the same or different at each occurrence and are the residues of an electrophilic group formed by reaction between a nucleophilic group Z² and an electrophilic group Z¹ ;
   a and b are integers, a is not equal to b, a or b are equal to 0 or equal to or larger than 3, with the proviso that a or b is 0 ; and
   c and d are integers, c is not equal to d, c or d are equal to or larger than 1, with the proviso that the sum of c and d is equal to or larger than 3, and with the further proviso that when a is equal to 0, then d is greater than c and that when b is equal to 0 then c is greater than d.

As an essential element, the preferred hyperbranched macromolecule comprises one or more aromatic core moieties according to Formula 1. The number of core moieties may vary widely. The number of core moieties is preferably from about 1 to about 8, more preferably from about 1 to about 4, most preferably from about 1 to about 2. Those embodiments in which the number of core moieties is 1 are the embodiments of choice.

The core moiety comprises an optional substituted polyvalent aromatic group R¹. Preferably, the R¹-groups are phenyl, naphthyl, or an aromatic moiety formed by two or more phenyl groups linked together by amide, ester or urethane linkage. Preferably, amide or ester linkage is selected, more preferably amide linkage is selected.

The core moiety also comprises moieties A¹ and B¹, which are defined above. Preferably, A¹ is chosen from the group of O and NH. Preferably, B¹ is chosen from the group of COO and NHCO.

Suitable core molecules are 1,3,5-benzene tricarboxylic acid and 1,2,4,5-benzene tetracarboxylic acid.

The preferred hyperbranched macromolecule also comprises branching monomeric units according to Formula 2 as well as non-branching monomeric units according to Formula 3. Preferentially, the R²- and R³-groups are the same or different at each occurrence and are a polyvalent group according to the Formula 6 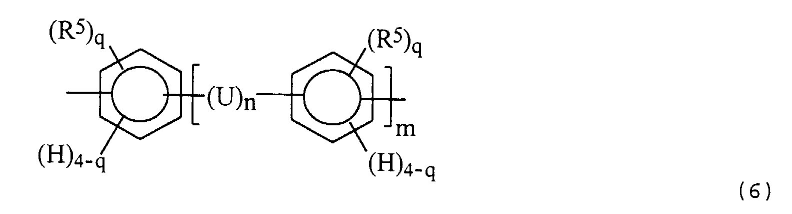 or Formula 7 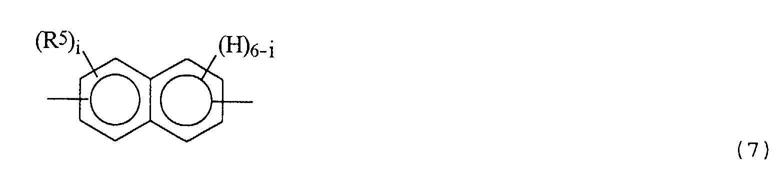 wherein :
q is an integer, ranging from 0 to 4 ;
i is an integer, ranging from 0 to 6 ;
m is an integer, equal to 0 or larger than 1 ;
n is an integer, equal to 0 or 1 ;
U is the same or different at each occurrence and is selected from the group of O, S, SO₂, NR⁶CO, CONR⁶, CO, COO, OCO or (CR⁶R⁷)ₚ ;
R⁵ is the same or different at each occurrence and is selected from the group of alkyl, aryl, alkoxyaryl, arylalkyl, alkylaryl, alkoxy, alkoxyalkyl, nitro, cycloalkenyl, halo, cyano, cycloalkyl and aryloxy ;
R⁶ and R⁷ are the same or different at each occurrence and are selected from the group of hydrogen or alkyl with 1 to 4 atoms.

Preferentially, as branching unit, p-aminoisophthalic acid is chosen.

In the preferred hyperbranched macromolecule, the ratio of core molecules to branching monomeric units may vary widely depending on several factors, such as the desired size of the hyperbranched macromolecule. In general, the molar ratio ranges between about 0.00005 and about 0.1. Preferably, the molar ratio ranges between about 0.0001 and about 0.5, more preferably between about 0.005 and about 0.3 and most preferably between about 0.01 and about 0.2.

In the preferred hyperbranched macromolecule, optionally, a plurality of non-branching (extension) recurring monomeric units according to Formula 3 may be present. Suitable non-branching monomers are those derived from the groups of aminoaryl acids, arylene diacids and arylenediamines, such as 1,4-benzene dicarboxylic acid, 1,3-benzene dicarboxylic acid, 4'4-biphenyl dicarboxylic acid, 2,6-naphthalene dicarboxylic acid, 1,4-diamino benzene, 1,3-diamino benzene, 4'4-diamino biphenyl, 3'3-diamino biphenyl, 2,2-[di-(4'4-diamino benzene)]propane, di-[4'4-diamino benzene] methane, 4-[4-aminophenoxy]aniline and the like.

In the preferred hyperbranched macromolecule, the ratio of branching monomeric units to non-branching monomeric units may vary widely depending on the desired properties. The larger the amount of non-branching units, the larger the distance may become between the branching points and the more expanded or porous the hyperbranched macromolecule will become, untill an maximum expansion has been reached. In general, the molar ratio of branching units to non-branching units may range between about 0.01 to about 100. Preferably, the molar ratio ranges between about 0.5 and about 10 ; more preferably between about 0.6 and about 3 ; most preferably between about 0.7 and about 2.

The preferred hyperbranched macromolecule includes at least one site on which at least one linear or branched polyamide chain is attached. Preferentially, the site is an electrophilic moiety -Z¹ or an nucleophilic moiety -Z², which are reactive with the end groups of the polymeric matrix polymer. Preferably, -Z¹ is COOH. Preferably, -Z² is NH₂.

The number average molecular weight of the hyperbranched macromolecule may vary widely. The number average molecular weight is usually at least about 5,000, preferably at least about 10,000, more preferably from about 10,000 to about 300,000 and most preferably from about 20,000 to about 100,000.

The amount of hyperbranched polymer in the composition according to the invention may vary widely. Usually, the amount ranges between about 0.1 % by weight to about 50 % by weight. However, the inventors surprisingly found that only very small amounts were needed to bring about the improvement in mechanical properties. Preferably, the amount ranges from about 0.5 % by weight to about 25 % by weight, more preferably from about 0.5 % by weight to about 12,5 % by weight, most preferably from about 1 % to about 6 % by weight.

The hyperbranched macromolecule can be prepared by any suitable method, of which the methods disclosed in US 5.480.944 are disclosed herein by reference.

The composition according to the invention comprises a hyperbranched macromolecule to which at least one linear or branched polyamide chain is attached, as well as a polymeric matrix formed from one or more linear or branched polyamide polymers.

The polyamide chains are attached to the hyperbranched macromolecule by way of a covalent bond formed as a result of a reaction between a functional group on the polyamide chain and a functional group on the hyperbranched macromolecule. Preferentially, said functional groups of the hyperbranched macromolecule are groups -Z¹ or -Z² according to formula (4) or (5). Preferentially, said functional groups on the polyamide chain are amine or carboxylic end groups.

The polyamide chains as well as the polymers may be chosen, each independently from each other, from the group of aliphatic and aromatic polyamides and copolyamides, such as poly(tetramethylene adipamide) (nylon-4,6), poly(hexamethylene adipamide) (nylon-6,6), poly(hexamethylene sebacamide) (nylon-6, 10), poly(heptamethylene pimelamide) (nylon-7,7), poly(octamethylene suberamide) (nylon-8,8), poly(nonamethyle azelamide) (nylon-9,9), poly(decamethylene azelamide (nylon-10,9), poly(4-aminobutyric acid) (nylon-4), poly(6-aminohexanoic acid) (nylon-6), poly(7-aminoheptanoic acid) (nylon-7), poly(8-aminooctanoic acid) (nylon-8), poly(9-aminononanoic acid) (nylon-9), poly(10-aminodecanoic acid)(nylon-10), poly(11-aminoundecanoic acid) (nylon-11), poly(12-aminododecanoic acid) (nylon-12), caprolactam/hexamethylene adipamide copolymer (nylon-6/6,6), hexamethylene adipamide/caprolactam copolymer (nylon-6,6/6), trimethylene adipamide/hexamethylene azelamide copolymer (nylon trimethyl-6,2/6,2), hexamethylene adipamide/hexamethylene azelamide/capryllactam copolymer (nylon-6,6/6,9/6), poly(trimethyl hexamethylene terephthalamide), poly(m-xylylene adipamide), poly(p-xylylene adipamide), poly(hexamethylene terephthalamide), poly(dodecamethylene terephthalamide), poly(iminomethylene-1,3-phenylene iminoadipolylene) and the like. Preferred polyamides are nylon-6, nylon-6,6 and copolyamides thereof.

The composition according to the invention may include optional ingredients known to the skilled person for use in polymer compositions. Such optional ingredients include fibrillar and non-fibrillar fillers, plasticisers, impact modifiers, colorants, mould release agents, antioxidants, ultraviolet light stabilisers, lubricants, antistatic agents, flame retardants and the like.

The composition according to the invention can be obtained in several ways. Preferably, the composition is obtained by copolymerizing the hyperbranched macromolecule with the monomers from which the polyamide is formed. In this way, the most optimal composition in terms of mechanical properties, is obtained. In another embodiment, the composition may be obtained by conventionally melt- or solution-blending of a matrix polymer and the hyperbranched macromolecule. Appropriate blending techniques are well known to the skilled person and will not be repeated here.

As a further aspect of the invention, the inventors have found that if the site of the hyperbranched porous aromatic polymeric macromolecule on which the linear or branched polyamide chain would attached is further functionalized with a functional group that comprises an initiator molecule for an anionic polyamide polymerisation reaction, the compatibility between the hyperbranched macromolecule and the polymer matrix was improved, such that the rate of dissolution and the amount of hyperbranched macromolecule that could be dissolved in the polyamide matrix was enhanced and hence, a composition with further improved mechanical properties was obtained. It is understood that in the latter enbodiment at least part of the linear polyamide chains are thus attached to said funtional group, preferentially through a reaction between the amine end groups of the polyamide chains and the carboxylgroup of an (opened) lactam ring.

Preferentially, said functional group is a group according to Formula 8

-D-R⁵-X (8)

wherein :
D is the same or different at each occurrence and is the residue of either a nucleophilic group or an electrophilic group formed by a reaction between a nucleophilic group Z² and an electrophilic group Z^{1 ;}
R⁵ is selected from the group comprising aryl and alkyl with less than 4 atoms; preferentially, R⁵ is a phenylgroup
X is an initiator molecule for a polyamide polymerisation reaction. Preferentially, X is an acyllactam group or a carbamoyllactam group.

Preferably the compound according to Formula 8 is

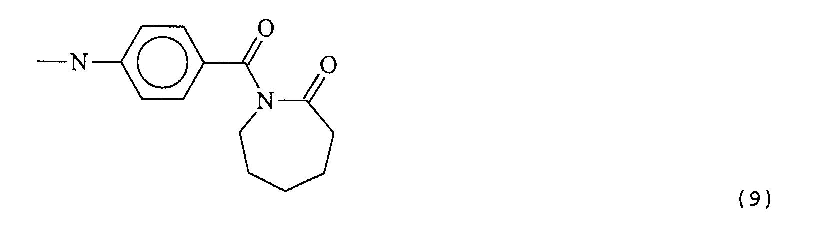

As yet a further aspect of the invention, the invention relates to a hyperbranched porous aromatic polymeric macromolecule, which comprises rigid aromatic recurring units and of which at least one site is functionalized with a functional group that comprises an initiator molecule for an anionic polyamide polymerisation reaction. Preferential embodiments have been described above.

In yet a further aspect of this invention, the invention relates to the use of such a functionalized hyperbranched macromolecule, as well as to an article, being an engineering plastic moulded article, foil, film or yarn, comprising at least the compositions according to the invention or the functionalized hyperbranched macromolecules according to the invention.

The invention will now be illustrated by some examples and comparative experiments. However, the invention is not limited thereto.

### Experimental

In all examples the following code for the hyperbranched macromolecules is used : "abcd", where :
a = endgroup :
   - COOH:: carboxylic acid
   - CAP :: N-(p-aminobenzoyl)caprolactam
   - I :: 4-iodoanilin
b = number and type of core :
   - 3A:: 1,3,5-benzenetricarboxylic acid
   - 4A:: 1,2,4,5-benzenetetracarboxylic acid
c = molar ratio of linear to branched compounds :
   - 1:: 1:1
   - 2:: 2:1
d = amount of core molecule (mol) :
   - Cl :: 1.96 x 10⁻³
   - C½ :: 0.98 x 10⁻³

### Examples I - IX :

### Preparation of the hyperbranched porous aromatic macromolecules

### A. Preparation of COOH-terminated hyperbranched macromolecules

To a 3-necked flask, continually flushed with N₂, 1.96 mmol of 1,3,5-benzenetricarboxylic acid (1,3,5-BTC), 0.031 mol of p-aminoisophthalic acid (PAIA) and 0.062 mol of p-aminobenzoic acid were charged (PABA) (for other combinations : see Table 1). 220 ml of dimethylacetamide (DMAc) was then transferred under N₂ via a septum to the flask (monomer concentration always Cₒ = 6 weight%, relative to the total weight of the solution). The solution was heated to 110 +/-1 °C under N₂ with continuous stirring. The solution became homogeneous. 0.116 mol Pyridine (py), followed by 0.116 mol triphenyl phosphite (TPP) was then added to the flask via a septum (always 15% excess referring to formed amide bonds). The solution was heated at 110 °C for 4 hours. After this time the solution was allowed to cool, transferred to a dropping funnel and added dropwise with stirring to a 10 fold excess (by volume) of methanol. The precipitate formed was collected by filtration under suction, washed with cold methanol, added to a soxlet apparatus and continuously washed for 2 hours with hot methanol. The washed hyperbranched macromolecule was then dried under vacuum at 80 °C until constant weight was achieved.

### B. Preparation of CAP-terminated hyperbranched macromolecules

After preparation of the corresponding acid-terminated hyperbranched macromolecule as described before, instead of precipitating the solution into methanol, 0.043 mol N-(p-aminobenzoyl)caprolactam (CAP) (15% excess to calculated amount of endgroups, see Table 1) and a further 0.043 mol of py and TPP were added and heating continued for 4 hours at 110 °C. The rest of the method was carried out as described above.

### C. Modification of the COOH-endgroups for analytical detection with 4-iodoanilin

To determine the number of acid endgroups (COOH) by elemental analysis according to US-5.480.944, a hyperbranched macromolecule having end groups capped with 4-iodoanilin was prepared. The preparation followed the preparation according to part A above. Instead of precipitating the solution into methanol, a further 0.043 mol of py and TPP and a five fold excess of 4-iodoanilin (0.2 mol) was added and heating continued for a further 6 hours to ensure the conversion of all endgroups. The rest of the method was carried out as described above in Part B.

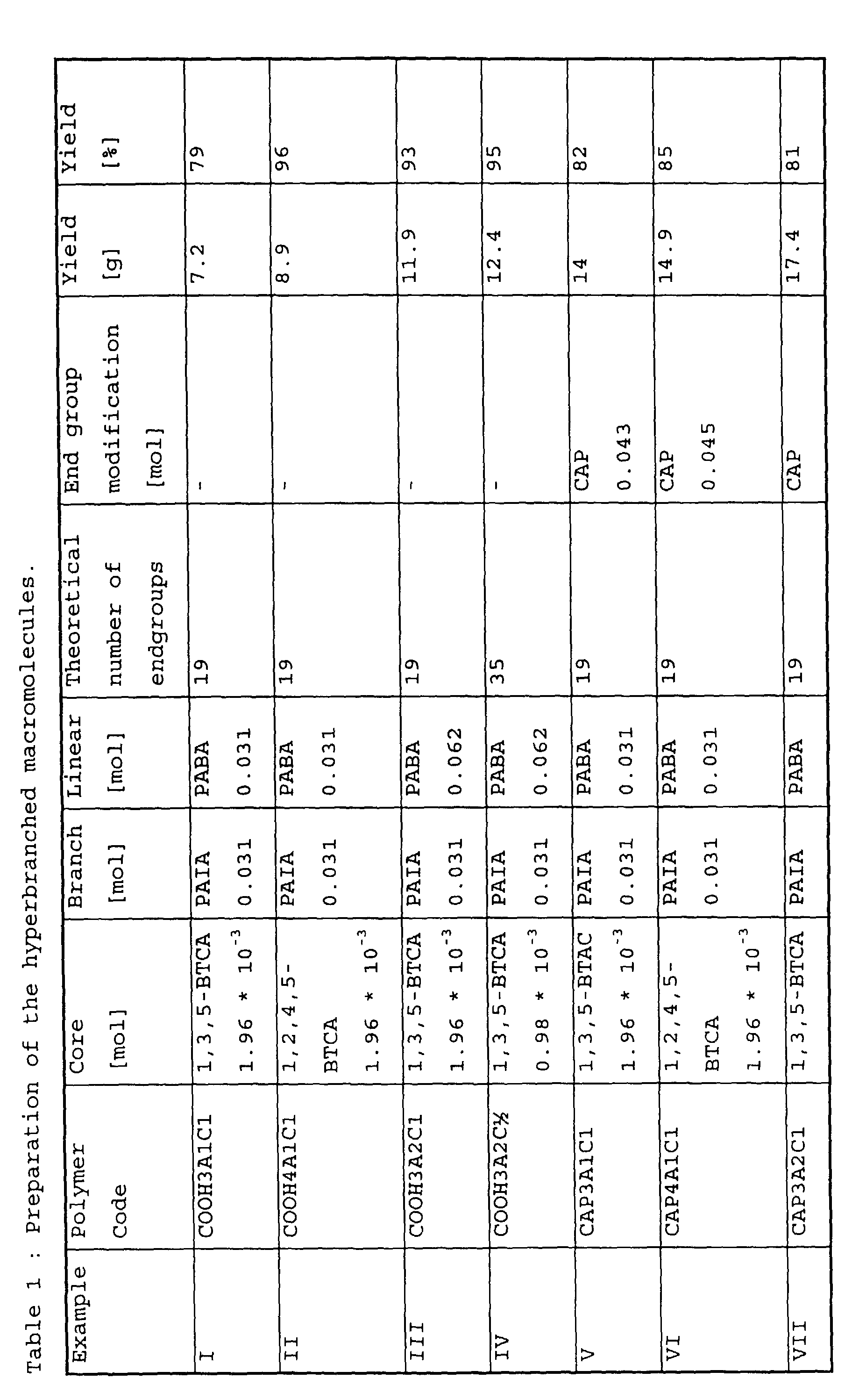

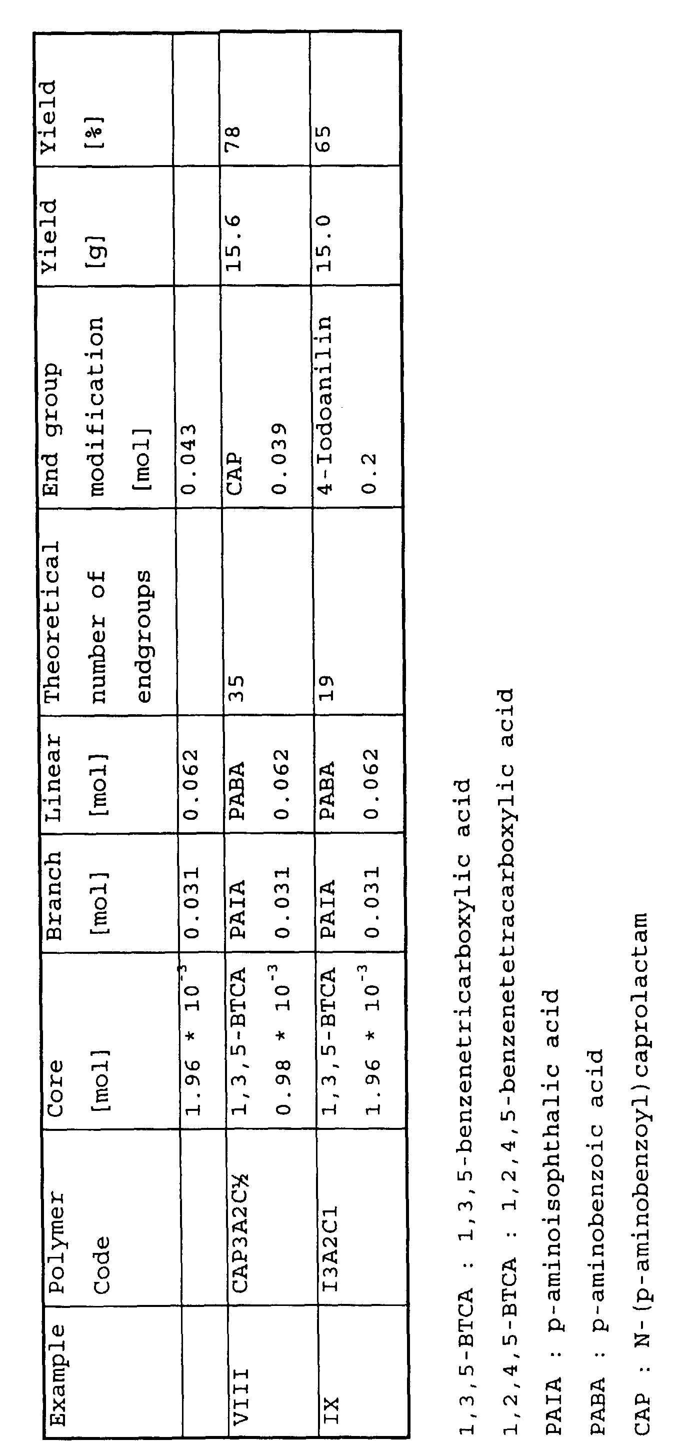

### D. Characterisation of the hyperbranched macromolecules

Elemental analysis was performed on some of the hyperbranched macromolecules of Table 1,on the basis of which the number of endgroups are calculated. The results of the elemental analysis on hyperbranched macromolecules with COOH-endgroups (see Table 2, Examples III and IV) show that the number of endgroups is indeed as theoretically as expected. The iodoanilin-method, as described in US-5.480.944 indicate that only about half of the theoretically expected COOH-endgroups is present (Table 2, Example IX). However, it is also possible that only about 50 % of the expected 19 COOH-endgroups is modified with 4-iodoanilin. This result shows that the 4-iodoanilin method is highly unreliable for the determination of COOH-endgroups.

As expected, the NH₂-endgroup titration failed to detect any amine-groups in the hyperbranched macromolecule.

A COOH-endgroup titration was performed on the hyperbranched macromolecules. The COOH-endgroup titration (Table 3) indicated that the number of acid endgroups per molecule determined was about 13-14 and that the conversation to CAP-endgroups reached about 80 %. The Mₙ used for the calculation of the number of endgroups is obtained from a Monte Carlo-simulation. A possible reason for the determined lower number of endgroups than theoretically expected could be phenylester endgroups which are formed by transferring phenoxy groups from the triphenyl phosphite to acid endgroups during the synthesis of the hyperbranched macromolecules. On the whole, the COOH-endgroup titration gives a lower limit to the number of endgroups present in the hyperbranched macromolecule. In this respect, C₁₃-NMR-measurements could be more suitable to determine the exact number of endgroups.

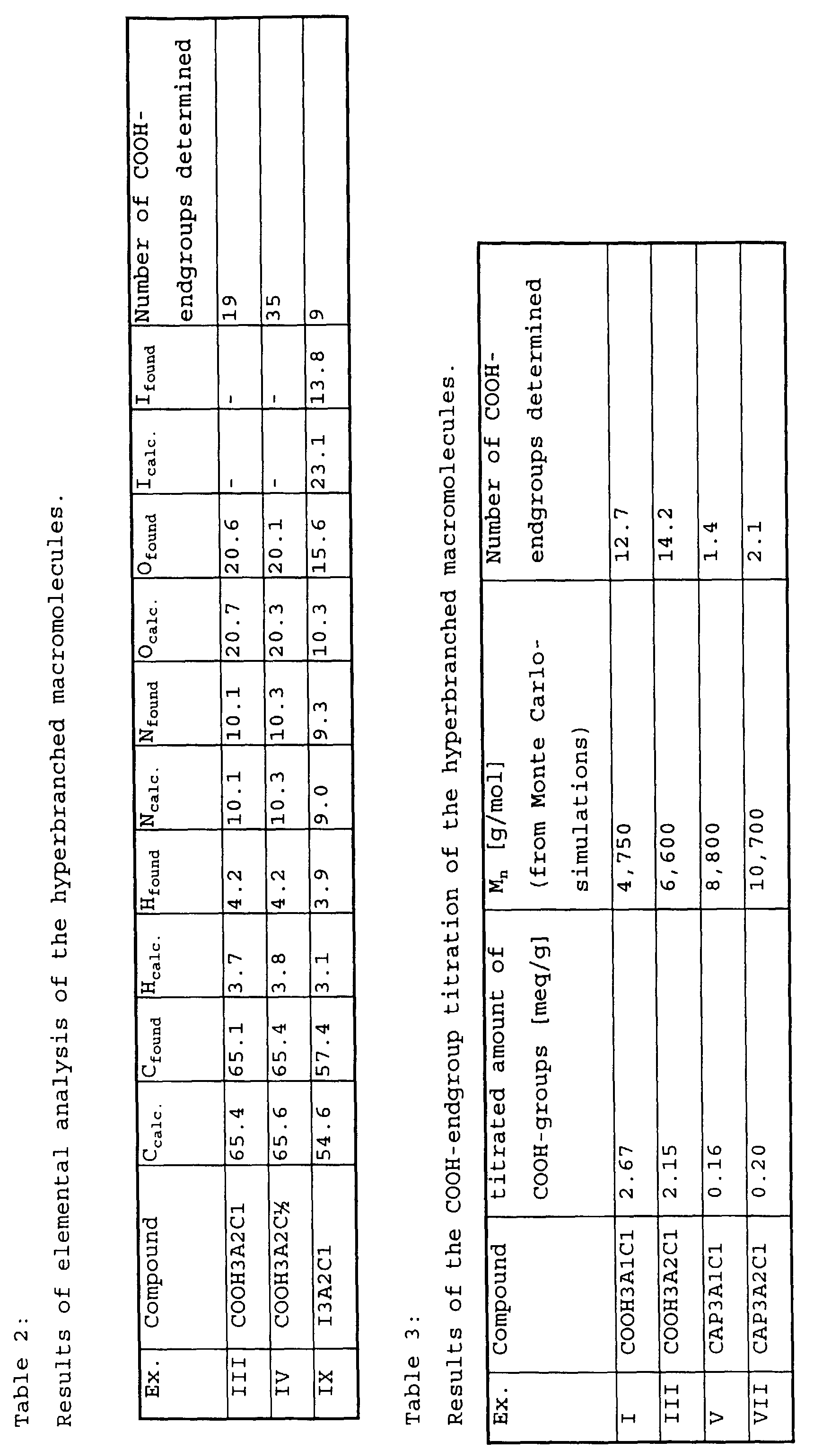

### Examples X-XVI and Comparative Example A :

### Synthesis of polyamide compositions

In a glass reactor a mixture of 100 g dried caprolactam chips, 1.0 g 6-aminocaproic acid and 2.0 g water was prepared. Hyperbranched macromolecules (see Table 1) were added in amounts of 0 to 5 weight% (relative to the mass of the mixture) to this mixture. The reaction flask was fitted with a condenser. It was then degassed and filled with N₂ ; this process was repeated further three times. The reaction flask was then left under a continuous flow of N₂ and heated according to a sequence as described in Table 5. The polyamide compositions thus prepared are given in Table 6.

**Table 5 :**

| Heating sequence for the preparation of the polyamide compositions. | |
|---|---|
| Time [min] | Temperature [°C] |
| 180 | 90 |
| 90 | 90-180 |
| 45 | 180-267 |
| 660 | 267 |

It was found that the hyperbranched macromolecules with CAP-endgroups (Examples X-XIII) were dissolved in the molten caprolactam at 90 °C after approximately 1 hour, while those with only free -COOH endgroups (Examples XIV-XVI) took 2 - 3 hours to dissolve. After the reaction was complete, a clear, homogeneous, viscous material was seen to be formed in all cases. The flask was left to cool to room temperature under N₂. The polyamide composition was removed, ground in a mill (particles 2 - 3 mm in diameter) and washed, under N₂, in water at reflux (3 x 600 ml, 3 x 2 hours). The washing process removed about 12-16 weight% of low molecular weight products and monomers. The polyamide composition was filtered, dried under suction then dried in vacuum at 80 °C for 17 hours. For post condensation, the dried polyamide composition was added to a post condensation apparatus, degassed and then exposed to a low pressure N₂ flow. The polyamide composition was re-dried (120 °C/2 hours) prior to post condensation (190 °C/17 hours).

**Table 6 :**

| Polyamide compositions according to the invention and Comparative Example A. | | |
|---|---|---|
| Example | Hyperbranched macromolecule from Example (code) | Concentration of hyperbranched macromolecule (weight %) |
| X | VII (CAP3A2C1) | 2 |
| XI | V (CAP3A1C1) | 1 |
| XII | V(CAP3A1C1) | 3 |
| XIII | V(CAP3A1C1) | 5 |
| XIV | III (COOH3A2C1) | 2 |
| XV | I (COOH3A2C1) | 1 |
| XVI | I (COOH3A2C1) | 3 |
| XVII | I (COOH3A2C1) | 5 |
| Comparative Example A | none | 0 |

### Mechanical properties

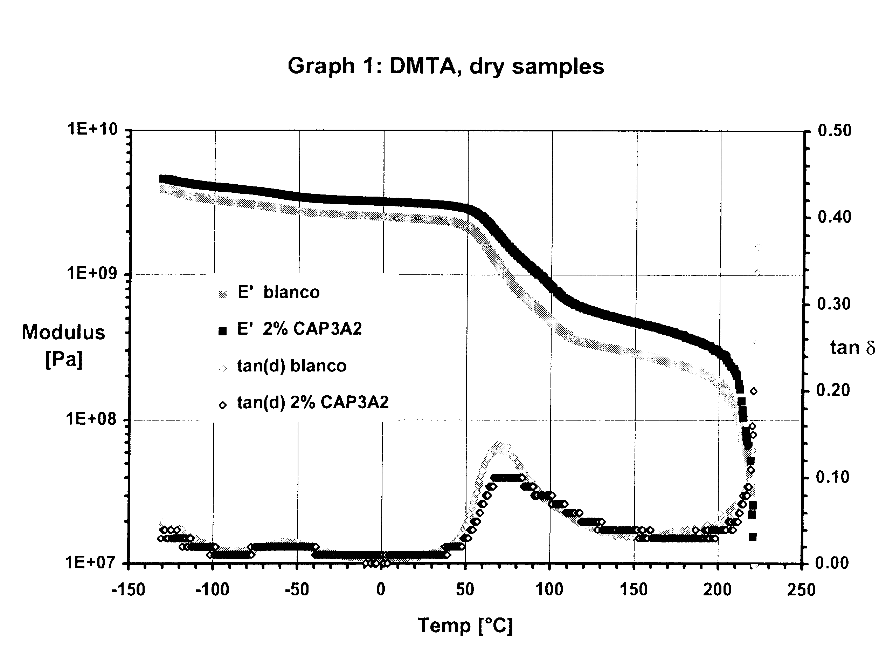

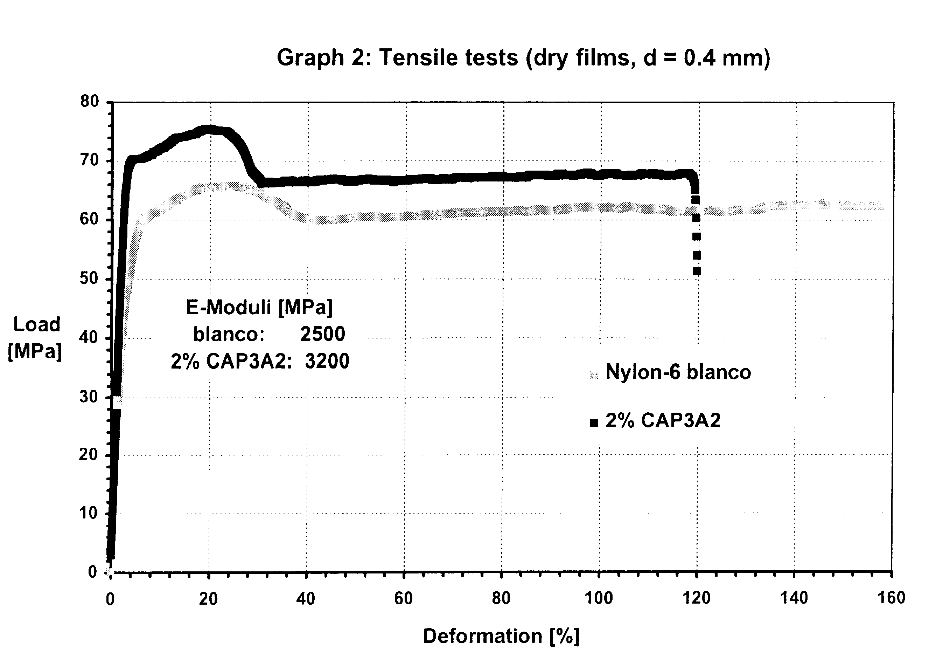

A substantial improvement of mechanical properties of polyamide-6 can be obtained by adding 2 weight% of hyperbranched porous aromatic macromolecules (Exp. X) to the polycondensation of caprolactam. The dynamic mechanical thermal analysis (DMTA, graph 1) and the tensile tests (graph 2) show higher E-modulus, higher yield strength and higher strength at break than the comparative material (Comparative Example A), combined with retention of a high elongation at break.

### Rheological properties

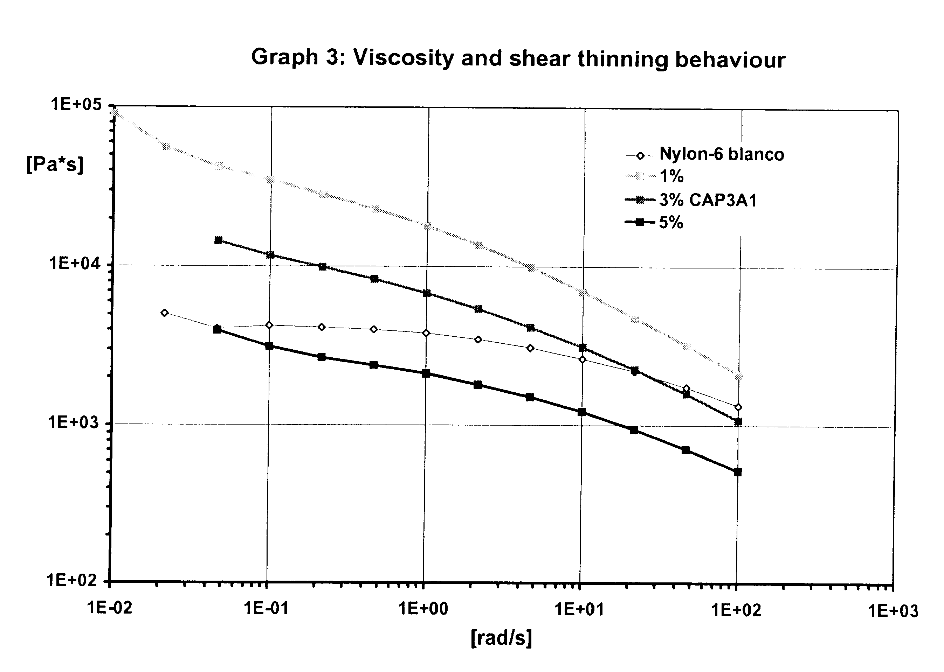

The rheological measurements (graph 3) show for the samples containing 1 weight% and 3 weight% of hyperbranched macromolecules (Examples XI and XII) a higher zero-shear viscosity than for the composition without the hyperbranched macromolecules (Comparative Example A) and for all three samples containing 1 weight%, 3 weight% and 5 weight% (Examples XI - XIII) stronger shear thinning, leading to better processability compared to the unreinforced material of Comparative Example A.

## Claims

1. A molecular reinforced polyamide composition comprising at least one linear or branched polyamide and a hyperbranched porous aromatic polymeric macromolecule, which comprises rigid aromatic recurring units, characterised in that the macromolecule comprises at least one site on which at least one linear or branched polyamide chain is attached.

2. Composition according to claim 1, characterised in that the rigid aromatic units are linked by electrophilic or nucleophilic reactive moieties or derivatives thereof.

3. Composition according to any one of claims 1-2, characterised in that the hyperbranched porous aromatic polymeric macromolecule comprises :
a) one or more aromatic core moieties according to
Formula 1
-(A¹)ₐ-R¹-(B¹)_{b}- ; (1)
b) a branched polymeric moiety bonded to and projecting away from said core moieties having
b1) a plurality of branching recurring monomeric units according to Formula 2 and
-(B²)_{c}-R²-(A²)_{d}- (2)
b2) a plurality of non-branching recurring monomeric units according to Formula 3
-B³-R³-A³- (3)
c) a plurality of sites on the branched polymeric moiety and bonded thereto, said sites according to Formula 4
-Z¹ (4)
when d is larger than c, and said sites according to Formula 5
-Z² (5)
when c is larger than d ;
wherein :
R¹, R² and R³ are aromatic moieties, being the same or different at each occurrence and being selected from the group comprising optionally substituted phenyl, biphenyl, naphthyl, anthracyl, phenanthryl or combinations of said optionally substituted aromatic groups thereof, the aromatic groups linked together by a linking moiety selected from the group consisting of amide, ester, carbonyl, sulfone, sulfide, alkylene from 1 to 10 carbon atoms, ether and urethane ;
Z¹ is the same or different at each occurrence and is an electrophilic group selected from the group comprising COOR⁴, NCO, COCl and COOMe, wherein Me is the same or different at each occurrence and is a monovalent cation selected from the group comprising NH₄⁺, Na⁺, K⁺, Li⁺, Cu⁺ and Ni⁺ ;
Z² is the same or different at each occurrence and is a nucleophilic group selected from the group comprising OH, NH₂, N(R⁴)₃⁺, CN and CON(R⁴)₂ ;
R⁴ is the same or different at each occurrence and is selected from the group comprising hydrogen, alkyl, aryl and aralkyl ;
A¹, A² and A³ are the same or different at each occurrence and are the residues of an nucleophilic group formed by a reaction between a nucleophilic group Z² and an electrophilic group Z¹ ;
B¹, B², B³ are the same or different at each occurrence and are the residues of an electrophilic group formed by reaction between a nucleophilic group Z² and an electrophilic group Z¹ ;
a and b are integers, a is not equal to b, a or b are equal to 0 or equal to or larger than 3, with the proviso that a or b is 0 ; and
c and d are integers, c is not equal to d, c or d are equal to or larger than 1, with the proviso that the sum of c and d is equal to or larger than 3, and with the further proviso that when a is equal to 0, then d is greater than c and that when b is equal to 0 then c is greater than d.

4. Composition according to any one of claim 1-3, characterised in that the hyperbranched macromolecule contains one aromatic core moiety.

5. Composition according to any one of claims 3-4, characterised in that the R¹-groups are chosen from the group of phenyl, naphthyl, or an aromatic moiety formed by two or more phenylgroups linked together by amide, ester or urethane linkage.

6. Composition according to any one of claims 3-5, characterised in that A¹ is chosen from the group of O and NH and that B¹, independently of A¹, is chosen from the group of COO and NHCO.

7. Composition according to any one of claims 3-6, characterised in that the core molecules are chosen from the group of 1,3,5-benzene tricarboxylic acid and 1,2,4,5-benzene tetracarboxylic acid.

8. Composition according to any one of claims 3-7, characterised in that R² and R³ are the same or different at each occurrence and are a polyvalent group according to the Formula 6 or Formula 7 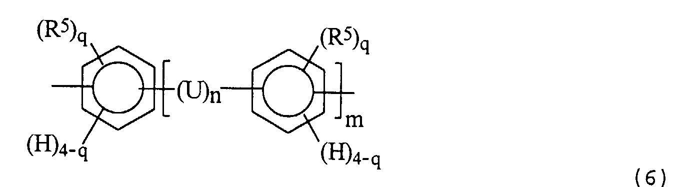 or 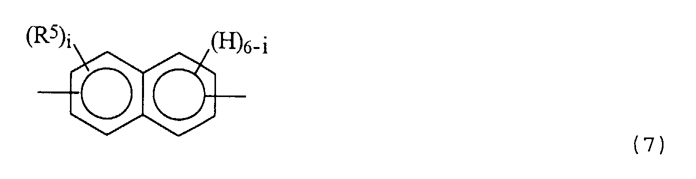 wherein :
q is an integer, ranging from 0 to 4 ;
i is an integer, ranging from 0 to 6 ;
m is an integer, equal to 0 or larger than 1 ;
n is an integer, equal to 0 or 1 ;
U is the same or different at each occurrence and is selected from the group of O, S, SO₂, NR⁶CO, CONR⁶, CO, COO, OCO or (CR⁶R⁷)ₚ ;
R⁵ is the same or different at each occurrence and is selected from the group of alkyl, aryl, alkoxyaryl, arylalkyl, alkylaryl, alkoxy, alkoxyalkyl, nitro, cycloalkenyl, halo, cyano, cycloalkyl and aryloxy ;
R⁶ and R⁷ are the same or different at each occurrence and are selected from the group of hydrogen or alkyl with 1 to 4 atoms.

9. Composition according to any one of claims 3-8, characterised in that as branching unit p-aminoisophthalic acid is chosen.

10. Composition according to any one of claims 3-9, characterised in that the site is an electrophilic moiety -Z¹ or an nucleophilic moiety -Z², which are reactive with the end groups of the polymeric matrix polymer.

11. Composition according to claim 10, characterised in that -Z¹ is COOH and -Z² is NH₂.

12. Composition according to any one of claims 1-11, characterised in that the amount of hyperbranched polymer in the molecular reinforced polyamide composition ranges from about 1% by weight to about 6 % by weight.

13. Composition according to any one of claims 1-12, characterised in that the linear or branched polyamide is nylon-6, nylon-6,6 and copolyamides thereof.

14. Composition according to any one of claims 1-13, characterised in that the composition is obtainable by copolymerizing the hyperbranched macromolecule with the monomers from which the polyamide is formed.

15. Composition according to any one of claims 1-14, characterised in that at least one site of the hyperbranched porous aromatic polymeric macromolecule is functionalized with a functional group that comprises an initiator molecule for an anionic polyamide polymerisation reaction.

16. Composition according to Claim 15, characterised in that the functional group is a group according to Formula 8
-D-R⁵-X (8)
wherein :
D is the same or different at each occurrence and is the residue of either a nucleophilic group or an electrophilic group formed by a reaction between a nucleophilic group Z² and an electrophilic group Z¹
R⁵ is selected from the group comprising aryl and alkyl with less than 4 atoms ;
X is an initiator molecule for an anionic polyamide polymerisation reaction.

17. Composition according to Claim 16, characterised in that R⁵ is a phenylgroup.

18. Composition according to Claim 17, characterised in that X is an acyllactam group.

19. Composition according to any one of claims 16 - 18, characterised in that the compound according to Formula 8 is

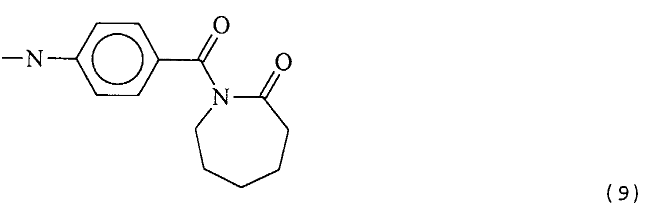

20. Hyperbranched porous aromatic polymeric macromolecule, which comprises rigid aromatic recurring units, characterised in that at least one site is functionalized with a functional group that comprises an initiator molecule for an anionic polyamide polymerisation reaction.

21. Hyperbranched porous aromatic polymeric macromolecule according to Claim 20, characterised in that the functional group is a group according to Formula 8
-D-R⁵-X (8)
wherein :
D is the same or different at each occurrence and is the residue of either a nucleophilic group or an electrophilic group formed by a reaction between a nucleophilic group Z² and an electrophilic group Z¹ ;
R⁵ is selected from the group comprising aryl and alkyl with less than 4 atoms ;
X is an initiator molecule for an anionic polyamide polymerisation reaction.

22. Hyperbranched porous aromatic polymeric macromolecule according to Claim 21, characterised in that R⁵ is a phenylgroup.

23. Hyperbranched porous aromatic polymeric macromolecule according to any one of Claims 21-22, characterised in that X is an acyllactam group or a carbamoyllactam group.

24. Hyperbranched porous aromatic polymeric macromolecule according to any one of Claims 21-23, characterised in that the compound according to Formula 8 is

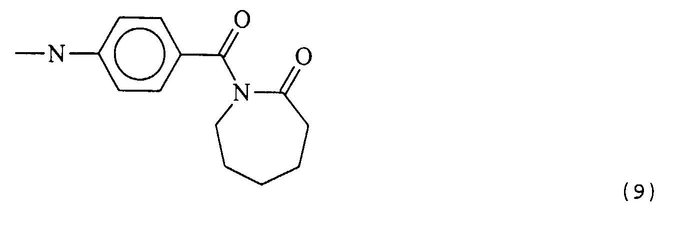

25. Use of a hyperbranched porous aromatic polymeric macromolecule according to any one of claims 1-24 for molecular reinforcement of a polyamide composition.

26. Article comprising a composition according to any one of claims 1-19 or comprising a hyperbranched porous aromatic polymeric macromolecule according to any one of claims 20-24.

27. Molecular reinforced polyamide composition or hyperbranched porous aromatic polymeric macromolecule as described and elucidated on the basis of the examples.
